# EUROPÄISCHE PATENTSCHRIFT

(11) **EP 1 938 308 B1**
(45) Veröffentlichungstag und Bekanntmachung des Hinweises auf die Patenterteilung: **06.04.2011**
(21) Anmeldenummer: 06806331.2
(22) Anmeldetag: 12.10.2006
(51) Int. Cl.: G10H 1/00, A63B 69/00

(54) **STEUERUNG DER WIEDERGABE VON AUDIOINFORMATIONEN**
CONTROLLING REPRODUCTION OF AUDIO DATA
COMMANDE DE RESTITUTION D'INFORMATIONS AUDIO

(30) Priorität: 13.10.2005 DE 102005049485
(43) Veröffentlichungstag der Anmeldung: 02.07.2008
(73) Patentinhaber: Fraunhofer-Gesellschaft zur Förderung der angewandten Forschung e.V., 80686 München (DE)
(72) Erfinder: BIEBER, Gerald, 18059 Papendorf (DE); DIENER, Holger, 18057 Rostock (DE); KORTEN, Malte, 81541 München (DE); MAINKA, Mathias, 18059 Rostock (DE)
(74) Vertreter: Patentanwälte Bressel und Partner
(86) Internationale Anmeldenummer: PCT/EP2006/009998
(87) Internationale Veröffentlichungsnummer: WO 2007/042329

(56) Entgegenhaltungen:
- EP-A2- 1 533 784
- WO-A-89/00064
- WO-A1-2005/082472
- WO-A2-2004/072767
- JP-A- 2001 299 980

## Beschreibung

Die Erfindung betrifft ein Verfahren und eine Vorrichtung zur Steuerung einer akustischen Wiedergabe von Audioinformationen. Die Erfindung betrifft insbesondere die akustische Wiedergabe beim Sport, zur Unterhaltung (beispielsweise bei Freizeitaktivitäten) oder bei körperlicher Betätigung zu therapeutischen oder diagnostischen Zwecken.

Trainingsprozesse enthalten in einer Vielzahl von Fällen Bewegungsabläufe, die periodisch wiederkehrende Ereignisse aufweisen. Beispielsweise übt der Trainierende oder Sportler beim Fahrrad fahren periodisch wiederkehrend von oben Druck auf die rechte und/oder linke Pedale des Fahrrads aus. Beim Laufen oder Walken kann der Zeitpunkt des Ereignisses durch das Auftreffen des rechten und/oder linken Fußes auf den Boden definiert werden.

Es ist bekannt, während des Sports oder des Trainings Musik abzuspielen, um die Person zu unterhalten und zu motivieren. Verschiedene Studien haben gezeigt, dass beim Laufen mit Musik sowohl Ausdauer als auch Laufleistung verbessert werden. Läufer bleiben entspannter, die Atmung wird tiefer und gleichmäßiger. Dadurch bekommen die arbeitenden Muskeln mehr Sauerstoff und der Trainingseffekt wird gesteigert. Besonders gewünscht wird beim Training das Hören von Lieblingsmusik der jeweiligen Person. Jedoch passt der Rhythmus der Musik meist nicht zum Rhythmus der ausgeführten Bewegung oder der für das Training optimalen Bewegung. Die Person passt ihre Bewegung an die Musik an und verfehlt somit meistens das Trainingsziel.

Von den Erfindern dieser Erfindung wurde bereits ein Gerät vorgeschlagen, das die Musikfrequenz an die Frequenz einer periodisch ablaufenden Bewegung anpasst, ohne die Tonhöhe zu verändern. Die Vorrichtung und das entsprechende Verfahren können beispielsweise wie in der deutschen Patentanmeldung mit der Veröffentlichungsnummer DE 103 09 834 A1 beschrieben ausgeführt werden, wobei sich diese Patentanmeldung jedoch mit der Wiedergabe von gesprochener Information befasst.

Dieses Verfahren ermöglicht es insbesondere bei Bewegungen, die über einen langen Zeitraum hinweg mit konstanter Periodendauer ausgeführt werden, dass die ausführende Person den Rhythmus der Musik für das Training oder den Sport nutzt. Vor allem bei Bewegungsabläufen mit sich veränderndem Rhythmus ist es jedoch für die trainierende oder Sport treibende Person schwierig, sich der Musik anzupassen.

EP 1 533 784 A2 beschreibt eine Steuereinrichtung für einen Wiedergabemodus und ein Verfahren. Es werden Bewegungen eines Benutzers in Aufwärts- und Abwärtsrichtung detektiert. Eine Detektionseinheit detektiert das Geh-Intervall des Benutzers, basierend auf einer Ausgabe eines Vibrationssensors. Eine Steuerung des Wiedergabemodus vollführt die Steuerung, um die Wiedergaberate von Musikinhalten auf das Geh-Intervall des Benutzers einzustellen. In Beispiel 3 der Druckschrift wird beschrieben, dass eine Musikwiedergabeeinrichtung nicht nur in der Lage ist, die Wiedergabegeschwindigkeit zu ändern, sondern auch das Timing des Benutzers beim Auftreten mit dem Schlag (Beat) der Musik zu synchronisieren.

Die am 27. April 2006 veröffentlichte WO 2006/043536 A1 beschreibt, dass das Timing des Schritts eines gehenden Benutzers und das Timing eines Schwunges des Körpers des Benutzers detektiert werden. Der Inhalt einer musikalischen Komposition, eines sich bewegenden Bildes oder dergleichen wird so reproduziert, dass das detektierte Timing mit dem Timing des Schlages der musikalischen Komposition oder dem Timing eines Szenenwechsels des sich bewegenden Bildes synchronisiert wird.

WO 2004/072767 A2 beschreibt eine Vorrichtung zur Audio-Reproduktion. Eine Einheit kann so ausgestaltet sein, dass sie Tempoveränderungen innerhalb eines ausgewählten Stücks von Musik kompensieren kann, z.B. indem Abschnitte des Eingangssignals hinzugefügt werden. Ferner kann die Tonhöhe erhalten werden. Über einen zusätzlichen Eingang kann ein Synchronisierungssignal empfangen werden, so dass ein Gruppentraining möglich ist, bei dem ein erster Benutzer das Tempo für einen zweiten Benutzer auswählt.

WO 2005/082472 A1 beschreibt eine Vorrichtung und ein Verfahren zum Auswählen und Anpassen von Audiosignalen an eine zu erzielende Herzschlag-Rate einer Person. Eine Steuereinheit speichert eine erfasste Herzschlag-Rate in einer Speichereinheit und vergleicht sie mit einem vorgegebenen Vergleichswert. Ferner wählt die Steuereinheit ein Audiosignal aus, das ein Tempo hat, welches einem angemessenen Level entspricht, um die Herzschlag-Rate des Benutzers zu erhöhen, zu erniedrigen oder beizubehalten.

Es ist eine Aufgabe der vorliegenden Erfindung, ein Verfahren und eine Vorrichtung der eingangs genannten Art anzugeben, die die Kooperation der sich bewegenden Person mit der wiedergegebenen Audioinformation verbessern. Außerdem soll erreicht werden, dass auch bei sich verändernder Periodendauer der Bewegung die akustisch wiedergegebene Audioinformation die Erreichung des Bewegungserfolges fördert.

Es wird vorgeschlagen, eine akustische Wiedergabe von Audioinformationen so zu steuern oder zu regeln, dass in den Audioinformationen enthaltene Audioelemente, die sich periodisch wiederholen, synchron mit (insbesondere periodisch) wiederkehrenden Ereignissen wiedergegeben werden. Dabei kann die Synchronisierung auch um einen vorgegebenen Zeitbetrag versetzt gegen den jeweiligen Zeitpunkt des Auftretens eines der wiederkehrenden Ereignisse erfolgen (Offset-Synchronisierung). Beispielsweise kann es ein Läufer wünschen, dass das Audioelement bereits dann wiedergegeben wird, wenn sein Fuß den Boden zwar schon berührt, aber noch nicht die maximale Kraft auf den Boden ausgeübt, wobei der Zeitpunkt des Ausübens der maximalen Kraft detektiert wird und der Zeitpunkt des wiederkehrenden Ereignisses ist.

Insbesondere wird ein Verfahren zur Steuerung einer akustischen Wiedergabe von Audioinformationen vorgeschlagen, wobei
- die Audioinformationen Audioelemente aufweisen, die sich periodisch wiederholen,
- Bewegungsinformationen über einen Bewegungsprozess erfasst werden, der wiederkehrende Ereignisse aufweist, oder derartige Bewegungsinformationen vorliegen, und
- unter Verwendung der Bewegungsinformationen die Wiedergabe der Audioinformationen derart gesteuert wird, dass zumindest innerhalb eines Zeitraumes jedes n-te der sich periodisch wiederholenden Audioelemente gleichzeitig mit dem Zeitpunkt des Auftretens eines der wiederkehrenden Ereignisse wiedergegeben wird (Synchronisierung) oder zeitlich um einen vorgegebenen Zeitbetrag versetzt gegen den Zeitpunkt des Auftretens eines der wiederkehrenden Ereignisse wiedergegeben wird (Offset-Synchronisierung), wobei n eine positive ganze Zahl ist.

Unter Steuerung einer akustischen Wiedergabe wird auch ein Prozess verstanden, der im Rahmen einer Regelung stattfinden kann.

Unter Synchronisierung wird im Folgenden auch die Offset-Synchronisierung verstanden. Der vorgegebene Offsetwert (Zeitbetrag) ist zumindest für einzelne Zeiträume vorgegeben. Er kann jedoch im Laufe der Wiedergabe verändert werden und z. B. von Größen wie Pulsfrequenz einer Person abhängen. Erhöht sich die Pulsfrequenz beispielsweise über einen vorgegebenen Grenzwert, kann die Wiedergabegeschwindigkeit reduziert werden, ein Warnsignal ausgegeben werden und/oder für die weitere Synchronisierung erstmals ein Offsetwert oder ein anderer Offsetwert als bisher vorgegeben werden. In allen Fällen kann die sich bewegende Personen davon abgehalten werden, sich weiter mehr als sinnvoll körperlich anzustrengen.

Unter sich periodisch wiederholenden Audioelementen werden insbesondere jegliche Elemente von wiederzugebender Audioinformation verstanden, die einen Rhythmus, einen Takt und/oder ein Metrum erkennen lassen oder bilden. Dabei kann es sich in der Musik beispielsweise um die von einem Schlagzeug oder einem anderen Rhythmusinstrument erzeugten Audiosignale handeln (z.B. so genannter Beat oder Schlag). Auch Elemente eines Metrums (d.h. gleichmäßige Grundschläge ohne Betonungen) kommen in Frage. Eine weitere Möglichkeit periodischer Audioelemente besteht in der rhythmischen Folge von Tönen und/oder Stimmlauten mit unterschiedlicher Tondauer, die beispielsweise einem Grundpuls entsprechend auftreten können. Die Erfindung ist jedoch nicht auf Musik beschränkt. Vielmehr können auch andersartige Audioinformationen wiedergegeben werden, beispielsweise rhythmische Tiergeräusche, von menschlichen Stimmen erzeugte Laute (z. B. rhythmisches Sprechen) oder künstlich erzeugte Audiosignale, die nicht als Musik bezeichnet werden können.

Die erfindungsgemäße Synchronisierung der Audioelemente mit den Bewegungsereignissen kann selbst bei einer Veränderung des Rhythmus der Bewegung nahezu jederzeit gewährleistet werden. Daher empfindet die Person (oder die Personen), die die Bewegung ausführt, die wiedergegebenen Audioinformationen als Unterstützung der Bewegung. Die Person muss sich nicht dem Rhythmus der Musik oder anderen Audioinformationen anpassen. Z. B. beim Trainieren auf einem Fahrrad-Trainingsgerät muss die Bewegung daher nicht umständlich der Musik angepasst werden.

Insbesondere kann sich das jeweilige Audioelement, das sich periodisch wiederholt, bis zu einem erneuten Auftreten verändert haben. Dies ist z. B. bei einem Schlagzeug-Solo der Fall. Außerdem kann sich die Periodendauer verändern. Z. B. gibt es Musik mit wechselndem Rhythmus. Dennoch kann die momentane Periodendauer (wie noch anhand eines Ausführungsbeispiels näher erläutert wird), die sich bei einer unveränderten Wiedergabe der Audioinformationen ergeben würde, bestimmt werden. Es ist also auch dann möglich, die Wiedergabe der Audioinformationen mit dem Bewegungsprozess zu synchronisieren, wenn sich das Audioelement und/oder die Periodendauer verändert.

Die (insbesondere periodisch) wiederkehrenden Ereignisse des Bewegungsprozesses können je nach Art des Bewegungsprozesses, aber auch bei ein und demselben Bewegungsprozess auf unterschiedliche Art definiert werden. Beim Laufen wird das Ereignis beispielsweise durch das Auftreten des rechten und/oder linken Fußes auf dem Untergrund definiert. Beim Fahrrad fahren oder anderen Bewegungsprozessen, die kontinuierlichere Bewegungen als das Laufen enthalten, kann der Zeitpunkt des Ereignisses z. B. durch das Auftreten des innerhalb eines Teilbewegungsablaufes höchsten Kraftaufwandes oder das Auftreten der größten Beschleunigung und/oder durch eine bestimmte vordefinierten Stellung der jeweiligen Bewegungseinrichtung (zum Beispiel die Pedal-Drehstellung eines Fahrrad-Hometrainer) definiert sein. Beispielsweise kann beim Fahrrad Fahren der Zeitpunkt als Zeitpunkt des Ereignisses festgestellt werden, zu dem der rechte und/oder linke Fuß die größte von oben auf eines der Pedale wirkende Kraft ausübt.

Zusätzlich zu der akustischen Wiedergabe der Audioinformationen kann optische Information ausgegeben werden, z. B. Lichtpulse und/oder Balkendarstellungen, wobei sich die Länge des Balkens im Laufe der Zeit in der von Equalizer-Anzeigen bekannten Weise ändert. Die optische Information kann beispielsweise mit einem geeigneten Visier oder einer geeigneten Brille dargestellt werden, die sich im Gesichtsfeld der Person befindet. Dabei wird die optische information synchron zu der Wiedergabe der Audioelemente wiedergeben (beispielsweise jeweils ein Lichtpuls gleichzeitig mit der Wiedergabe jedes der Audioelemente).

Der Verlauf der Synchronisierung und die der Synchronisierung zu Grunde liegenden Eingangsinformationen (insbesondere die zeitliche Folge der wiederkehrenden Ereignisse und der Audioelemente) können protokolliert werden bzw. entsprechende Daten aufgezeichnet werden. Dies ermöglicht eine Auswertung zur nachträglichen Analyse des Bewegungsprozesses.

Es ist auch möglich, dass der Bewegungsprozess, über den die Bewegungsinformationen erfasst werden, von einer anderen Person ausgeführt wird als die Person, die die Audiowiedergabe hört. Beispielsweise können mehrere Personen zusammen Sport treiben und die Bewegung von einer der Personen vorgegeben werden. Entsprechend auf die Bewegungsereignisse dieser Person (erste Person) synchronisierte Audioinformationen werden dann für alle Personen hörbar ausgegeben. Beispielsweise können von einem Gerät, das die erste Person am Körper trägt, Informationen über die Zeitpunkte der Bewegungsereignisse drahtlos zu Geräten der anderen Personen übertragen werden, die jeweils von den anderen Personen am Körper getragen werden und von denen die Synchronisierung durchgeführt wird. Es ist jedoch auch möglich, dass bereits die synchronisierte Audioinformation zu den anderen Personen übertragen wird. In jedem Fall kann die erste Person somit den Bewegungsrhythmus vorgeben und können die anderen Personen ihre Bewegungen entsprechend ausführen.

Wie bereits aus dem vorangegangenen Absatz folgt, kann die Synchronisierung an einem beliebigen Ort stattfinden. Bei einer Ausgestaltung werden die Informationen über die Zeitpunkte der Bewegungsereignisse zu einer zentralen Einrichtung (z. B. ortsfester Server) übertragen, z. B. über ein Mobilfunknetz. Die zentrale Einrichtung führt die Synchronisation durch und überträgt die synchronisierten Audioinformationen zur Wiedergabe zu den Personen, die die Bewegung ausführt und/oder zu einer anderen Person.

Bevorzugt wird jedoch, dass sowohl die Synchronisation als auch die Ausgabe von Signalen, die die synchronisierten Audioinformationen enthalten, von einem Gerät durchgeführt wird, das klein und kompakt ist und am Körper einer Person getragen werden kann. Bei dem Gerät kann es sich z. B. um einen modifizierten MP3-Spieler, ein modifiziertes Mobiltelefon oder um einen modifizierten PDA (Personal Digital Assistant) handeln. Das Gerät kann insbesondere die später beschriebene Anordnung in einer ihrer Ausgestaltungen aufweisen.

Die Wiedergabe der Audioinformationen kann so gesteuert werden, dass zu jedem Auftreten eines der wiederkehrenden Ereignisse des Bewegungsprozesses jeweils das nächstfolgende der sich periodisch wiederholenden Audioelemente akustisch wiedergegeben wird. Insbesondere ist sowohl für das wiederkehrende Ereignis als auch für das abzuspielende Audioelement ein charakteristischer Zeitpunkt definiert, auch wenn sich das Abspielen des Audioelements über einen kurzen Zeitraum hinweg erstreckt. Die Verwendung solcher Zeitpunkte wird aber auch im allgemeinen Fall bevorzugt, wenn nicht zu jedem Zeitpunkt des Auftretens eines der wiederkehrenden Bewegungsereignisse das jeweils nächste sich periodisch wiederholende Audioelement wiedergegeben wird. In diesem allgemeinen Fall wird zumindest innerhalb eines Zeitraumes jedes n-te der sich periodisch wiederholenden Audioelemente gleichzeitig mit dem Auftreten eines der wiederkehrenden Ereignisse wiedergeben, wobei n eine positive ganze Zahl ist. Diese Zeitpunkte des gleichzeitigen Auftretens werden im Folgenden als Synchronzeitpunkte bezeichnet.

Insbesondere werden die Audioinformationen so wiedergegeben, dass sich Tonhöhen der Audioinformationen durch die Synchronisierung nicht verändern. Auf diese Weise empfindet die jeweilige Person z. B. die Musik nicht als verändert, obwohl die Wiedergabe-Geschwindigkeit der Musik zum Zweck der Synchronisierung verändert wurde. Verfahren, die eine Veränderung der Wiedergabe-Geschwindigkeit von Musik beschreiben, sind z. B. aus den folgenden Veröffentlichungen bekannt: Flanagan, J. L.; Golden, R. M.: "Phase Vocoder", Bell System Technical Journal, November 1966, Seiten 1493-1509, und Malah, D.: "Time -Domain Algorithms for Harmonic Bandwidth Reduction and Time Scaling of Speech Signals", IEEE Transactions on Acoustics, Speech and Signal Processing, Vol. ASSP-27: 121-133, April 1979.

Diese Veröffentlichungen beschreiben jedoch nicht die erfindungsgemäße Synchronisierung.

Dennoch können diese Verfahren für die Synchronisierung eingesetzt werden. Zum Beispiel kann die Geschwindigkeit der Wiedergabe vorübergehend so verändert werden, dass die Synchronisierung erzielt wird. Um die Geschwindigkeit verändern zu können, kann z. B. wie in der Veröffentlichung von Flanagan beschrieben eine Fouriertransformation der Audioinformationen von dem Zeitraum in den Frequenzraum durchgeführt werden. Als Ergebnis der Transformation und der entsprechenden Rücktransformation treten typischerweise unschön klingende Effekte (so genannte "phasiness", "transient smearing") auf. Um diese Effekte zu mildern, können zusätzliche Verfahrensschritte ausgeführt werden (z.B. so genanntes "phase locking", wie in der folgenden Veröffentlichung beschrieben: Laroche, J.; Dolson, M.: "Improved Phase Vocoder Time-Scale Modification of Audio", IEEE Transactions on speech and audio processing, vol. 7, Nr. 3, Mai 1999, Seiten 323-332).

Die oben genannte Veröffentlichung von Malah beschreibt ein Verfahren (das so genannte Time-Domain Harmonic Scaling, TDHS), welches auf einer direkten Manipulation des Tonsignals im Zeitbereich beruht. Anstatt das Signal in den Frequenzbereich zu transformieren, wird das Tonsignal in der Analysephase in kleine überlappende Zeitbereiche aufgeteilt, die einzeln komprimiert beziehungsweise expandiert werden.

Bei einer Ausführungsform der Erfindung werden aus den Audioinformationen Blöcke mit Daten gebildet, wobei die Daten Teilinformationen der Audioinformationen sind. Jeder der Blöcke entspricht bei unveränderter (originaler) Wiedergabegeschwindigkeit jeweils einem Zeitintervall, das zur Wiedergabe der in dem Block enthaltenen Daten benötigt wird. Soll die Wiedergabegeschwindigkeit eines Blocks erhöht werden, wird die Menge der Daten in dem Block reduziert. Soll die Wiedergabegeschwindigkeit eines Blocks verringert werden, wird die Menge der Daten in dem Block erhöht. Dabei führt weder die Erhöhung der Datenmenge noch die Verringerung der Datenmenge zu einer Veränderung der Tonhöhen gegenüber der originalen Wiedergabegeschwindigkeit. Dies kann beispielsweise dadurch bewirkt werden, dass die Datenmenge in analoger Weise wie in der Veröffentlichung von Malah beschrieben verändert wird.

Vorzugsweise wird die Wiedergabe der Audioinformationen derart gesteuert, dass zumindest innerhalb des Zeitraumes der Synchronisation jedes n-te der sich periodisch wiederholenden Audioelemente gleichzeitig mit dem Zeitpunkt des Auftretens jedes m-ten der wiederkehrenden Ereignisse wiedergegeben wird oder zeitlich um einen vorgegebenen Zeitbetrag versetzt gegen den Zeitpunkt des Auftretens jedes m-ten der wiederkehrenden Ereignisse wiedergegeben wird, wobei n, m positive ganze Zahlen sind. Weiterhin wird bevorzugt, dass zumindest während des synchronisierten Zeitraumes sowohl die Periodendauer der Audioelemente als auch die Periodendauer der Bewegungsereignisse konstant ist.

Eine Ausgestaltung des Verfahrens ist geeignet, auch im Fall einer Veränderung der Periodendauer der Bewegungsereignisse zu synchronisieren. Dabei wird die Wiedergabe der Audioinformationen derart gesteuert, dass zumindest innerhalb eines synchronisierten Zeitraumes nach und/oder während der Veränderung der Periodendauer jedes o-te der sich periodisch wiederholenden Audioelemente gleichzeitig mit einem Auftreten eines der wiederkehrenden Ereignisse wiedergegeben wird oder zeitlich um einen vorgegebenen Zeitbetrag versetzt gegen ein Auftreten eines der wiederkehrenden Ereignisse wiedergegeben wird, wobei o gleich n ist oder eine andere positive ganze Zahl ist. Wenn o nicht gleich n ist, findet folglich ein Rhythmuswechsel bei der Synchronisation statt.

Eine Möglichkeit, die Synchronisierung zu bewirken, besteht in einer Vorausberechnung eines Zeitpunkts, an dem das nächste oder eines der nächsten wiederkehrenden Ereignisse der Bewegung wahrscheinlich auftreten wird. Es können daher Zeitpunkte des Auftretens der wiederkehrenden Ereignisse für die Vergangenheit bestimmt und/oder entsprechende gespeicherte Informationen ausgewertet werden. Aus den in der Vergangenheit liegenden Zeitpunkten wird in diesem Fall ein in der Zukunft liegender Zeitpunkt vorhergesagt und wird vorausberechnet, wie die Audioinformationen bis zu dem in der Zukunft liegenden Zeitpunkt wiederzugeben sind, damit ein Audioelement der Audioinformationen zu diesem Zeitpunkt oder um einen vorgegebenen Zeitbetrag versetzt gegen diesen Zeitpunkt wiedergegeben wird.

Diese Vorgehensweise lässt Spielraum für verschiedene Arten der Wiedergabe. Bei der Veränderung der Periodendauer der Bewegungsereignisse, aber auch in anderen Situationen (z. B. zu Beginn der Wiedergabe), soll die Synchronisation einerseits schnellstmöglich (wieder) hergestellt werden. Andererseits sollen hörbare Geschwindigkeitsänderungen (insbesondere Sprünge) in den wiedergegebenen Audioinformationen vermieden werden.

Die Geschwindigkeit der Wiedergabe der Audioinformationen bis zu dem in der Zukunft liegenden Zeitpunkt kann stetig verändert werden, sodass das Audioelement zu diesem Zeitpunkt oder um einen vorgegebenen Zeitbetrag versetzt gegen diesen Zeitpunkt wiedergegeben wird. Insbesondere kann die Geschwindigkeit bis zu dem in der Zukunft liegenden Zeitpunkt zumindest zeitweise linear verändert werden. Der Begriff Änderung ist in diesem Zusammenhang eine Änderung im Laufe der Zeit, nicht eine Änderung in Bezug auf eine normale Wiedergabegeschwindigkeit. Als besonders einfach zu berechnen und dennoch für den Hörer kaum wahrnehmbar ist eine Änderung der Geschwindigkeit, die in einem ersten Zeitraum (bezüglich der Geschwindigkeit) linear mit einer ersten, konstanten Änderungsrate durchgeführt wird und die in einem zweiten Zeitraum linear mit einer zweiten, konstanten Änderungsrate durchgeführt wird, wobei die erste und die zweite Änderungsrate verschieden sind. Die beiden Zeiträume können unmittelbar aneinander angrenzen. Durch die zumindest zwei verschiedenen linearen Änderungsraten ist es möglich, die Geschwindigkeit linear zu verändern und außerdem am Ende des Zeitraumes, in dem die Geschwindigkeit geändert wird, eine Synchronisierung zu bewirken. Insbesondere kann die Synchronisierung durch Einstellung der beiden linearen Änderungsraten bewirkt werden.

Gemäß den beigefügten Patentansprüchen jedoch wird die Synchronisierung durch eine Regelung bewirkt. Hierzu wird eine Signalfolge, die den zeitlichen Verlauf des Auftretens der Bewegungsereignisse wiedergibt, mit einer rückgekoppelten (an dem Regelkreis als Ausgangsignal anliegenden) Signalfolge verglichen und die Differenz auf Null oder auf einen vorgegebenen Zeit-Offsetwert, um den der Zeitpunkt der Wiedergabe des Audioelements von dem Zeitpunkt des Ereignisses abweicht, ausgeregelt. Dabei ist das Ausgangssignal ein Signal, das den zeitlichen Verlauf des Auftretens der wiederkehrenden Audioelemente wiedergibt. D. h. die Audioinformationen werden so wiedergeben, dass die zeitliche Abfolge der Audioelemente dem Ausgangssignal des Regelkreises entspricht.

Vorzugsweise wird für den Vergleich der beiden Signale ein Komparator verwendet. Das Ausgangssignal des Komparators (das der Differenz der beiden Signale entspricht) wird einem Filter (insbesondere einem Tiefpass-Filter) als Eingangssignals zugeführt. Das am Ausgang des Tiefpass-Filters anliegende Ausgangssignal wird einem Stellglied zugeführt, das die Wiedergabe der Audioinformationen steuert. Außerdem ist eine Einrichtung vorgesehen, die aus dem Stellsignal (Ausgangssignal des Stellgliedes) und/oder aus dem Ausgangssignal des Tiefpass-Filters das oben definierte Ausgangssignal des Regelkreises erzeugt, welches rückgekoppelt wird. Eine derartige Regelung ist für andere Zwecke als Phase Locked Loop (PLL) bekannt.

Es können auch andere Regelungsprinzipien angewendet werden.

Die Regelung hat den Vorteil, dass sie mit Ausnahme des Stellgliedes aus elektronischen, insbesondere mikroelektronischen Standard-Bauteilen aufgebaut werden kann. Auch das Stellglied kann ein elektronisches Standard-Bauteil aufweisen, insbesondere einen Mikroprozessor. In diesem Fall ist jedoch außerdem eine Programmierung des Mikroprozessors erforderlich, die die erfindungsgemäße Steuerung der Wiedergabe der Audioinformationen durchführt. Alternativ kann das Stellglied Teil eines Computers sein, der auch für andere Funktionen eingesetzt wird, z. B. als Recheneinheit eines PDA und/oder zur Dekodierung von kodierten Audioinformationen (z. B. im MP3-Format kodiert).

Eine derartige Regelung kann außerdem äußerst robust ausgeführt werden. Sie erfordert nicht, dass eine Vorausberechnung stattfindet, wann mit dem nächsten oder einem folgenden Bewegungsereignis zu rechnen ist und wie die Wiedergabe der Audioinformationen entsprechend anzupassen ist.

Ein weiterer Vorteil der Regelung besteht darin, dass der Rechenaufwand und damit die Belastung eines Datenprozessors im Vergleich zu der Vorausberechnung des Zusammentreffens von Bewegungsereignissen und Audioelemente gering sind. Außerdem kann eine Regelung besonders schnell auf eine Veränderung der Eingangssignale (z. B. des Bewegungs-Rhythmus) reagieren. Insbesondere ist für die Regelung keine Frequenzanalyse erforderlich.

Ein weiterer Aspekt der Erfindung, der mit der Regelung oder auch mit einer anderen Realisierung der Synchronisierung kombiniert werden kann, soll eine definierte, schnelle Reaktion auf eine Veränderung der Eingangsgrößen der Steuerung oder Regelung gewährleisten.

Es wird vorgeschlagen, einen Zeitraum und ein Maß (eine Zeitdifferenz) für eine zeitliche Abweichung der angestrebten Synchronisierung der Bewegungsereignisse und der Audioelemente (d. h. eine Abweichung zwischen dem Zeitpunkt der Wiedergabe des Audioelements und dem Zeitpunkt des Auftretens des Bewegungsereignisses) vorzugeben. Der vorgegebene Zeitraum beginnt, wenn das Maß für die Abweichung erreicht oder überschritten ist. Die Steuerung oder Regelung wird so ausgeführt, dass nicht später als am Ende des vorgegebenen Zeitraums das Maß für die Abweichung wieder erreicht oder unterschritten ist.

Diese Verfahrensweise bzw. eine entsprechend ausgestaltete Regelung können beispielsweise durch Wahl geeigneter Parameter der Regelung realisiert werden. Es ist nicht erforderlich, während des Betriebes der Regelung die Einhaltung des Zeitraums zu überwachen, da die Parameter der Regelung von vornherein so gewählt wurden, dass der Zeitraum eingehalten wird. Bei der Wahl der Parameter kann die Annahme getroffen worden sein, dass die Abweichung nicht größer als einen vorgegebenen Wert ist.

Das Verfahren, bei dem der vorgegebene Zeitraum und das vorgegebene Maß berücksichtigt werden, kann jedoch auch z. B. Teil des oben beschriebenen Verfahrens sein, bei dem ein Zeitpunkt, an dem das nächste oder eines der nächsten wiederkehrenden Ereignisse der Bewegung wahrscheinlich auftreten wird, vorausberechnet wird.

Insbesondere bei der Detektion von Schritten einer laufenden Person, aber auch bei der Verwendung von anderen Ereignis-Detektoren (z. B. bei mechanischen Sensoren) kann es zu so genannten Prelleffekten kommen, nämlich dem scheinbaren Auftreten zusätzlicher Ereignisse. Diese Ereignisse treten jedoch im Vergleich zu der Frequenz der tatsächlich aufgetretenen wiederkehrenden Ereignisse mit höherer Frequenz auf und werden daher vorzugsweise (insbesondere durch einen in Software implementierten Filter) herausgefiltert. Bei dem Filter kann es sich z. B. um einen periodischen Filter und/oder einen auf einer Modellierung der Bewegung basierenden Filter handeln. Durch das Modell kann erkannt werden, dass es sich bei einem detektierten Ereignis um ein Artefakt handelt. Das gefilterte Signal kann anschließend für die Synchronisierung verwendet werden.

Insbesondere wird daher vorgeschlagen, dass die erfassten Bewegungsinformationen derart gefiltert werden, dass scheinbar aufgetretene Bewegungsereignisse, die jedoch tatsächlich nicht aufgetreten sind, aus den Bewegungsinformationen herausgefiltert werden oder der Einfluss der scheinbaren Bewegungsereignisse auf die Synchronisierung verringert wird.

In einem konkreten Ausführungsbeispiel wird die Zeitdifferenz zweier aufeinander folgender Bewegungsereignisse mit einem Vergleichswert (Prellwertmaximum, z. B. 250 ms beim Laufen) verglichen. Liegt die Differenz unter dem Vergleichswert, wird eines der Bewegungsereignisse aus den Bewegungsinformationen gelöscht. Alternativ oder zusätzlich können Schwankungen einer aus den Bewegungsereignissen ermittelten Frequenz, mit der die Ereignisse auftreten, gedämpft werden. Das entsprechende, der Dämpfung unterzogene Frequenzsignal kann für die Synchronisierung verwendet werden.

Eine Möglichkeit, das Vorhandensein eines der sich wiederholenden Audioelemente in den Audioinformationen zu detektieren, besteht darin, dass wiederum die oben genannten Blöcke gebildet werden. Insbesondere weisen die darin enthaltenen Daten Informationen über die Höhe der Amplitude eines Signals als Funktion der Zeit auf (z. B. Daten im so genannten Wave-Format), wobei das Signal unmittelbar zur Ansteuerung von akustischen Wiedergabemitteln wie z. B. Lautsprechern verwendet werden kann. Für jeweils einen Block oder für mehrere zeitlich aufeinander folgende Blöcke wird ein Maß für die Amplitudenhöhe in dem gesamten Block bzw. in der Folge von Blöcken ermittelt. Dabei gehen negative und positive Amplitudenwerte in gleicher Weise in die Ermittlung ein. Beispielsweise wird der Betrag oder das Quadrat der Amplituden berücksichtigt. Z. B. kann der zeitliche Mittelwert des Quadrats der Amplitude als Maß berechnet werden. Liegt das Maß über einem Grenzwert (der z. B. von vornherein festgelegt ist oder der in Abhängigkeit von dem Ergebnis einer Auswertung einer Vielzahl von Blöcken festgelegt werden kann) wird entschieden, dass der Block oder die Folge von Blöcken das Audioelement enthält, nämlich zum Beispiel einen Schlag (Beat), der mit einem Schlagzeug erzeugt wurde, oder eine sonstige Betonung (im Sinne einer Hervorhebung gegenüber anderen zeitlichen Abschnitten) von Musik.

Für die Erkennung des Auftretens der Audioelemente kann auch wiederholt eine, jeweils auf einen bestimmten Zeitraum beschränkte Frequenzanalyse durchgeführt werden. Wenn der Zeitraum z. B. durch einen der oben genannten Blöcke definiert ist, kann für jeden der Blöcke die Frequenzanalyse durchgeführt werden. Das Ergebnis der Frequenzanalyse liefert beispielsweise einen Amplitudenwert für jedes von einer Mehrzahl von Frequenzbändern. Liegt der Amplitudenwert in einem der Frequenzbänder oder in einer bestimmten, insbesondere vorgegebenen Kombination von Frequenzbändern über einem (insbesondere spezifisch für das jeweilige Frequenzband definierten) Grenzwert, wird entschieden, dass sich in dem Zeitraum ein Audioelemente (z. B. ein Schlag) befindet.

Beispiele für eine so genannte "Beat-Detektion" sind zum Beispiel in Eric D. Scheirer: "Tempo and beat analysis of acoustic musical signals", J. Acoust. Soc. Am. 103 (1), Januar 1998, Seiten 588 - 601, oder in G. Tzanetakis, G. Essl und P. R. Cook: "Audio Analysis Using the Discrete Wavelet Transform", veröffentlicht in "Proceedings of WSES International Conference, Acoustics and Music: Theory and Applications (AMTA)", Skiathos, Griechenland, 2001, beschrieben. Die beiden Veröffentlichungen werden hiermit vollinhaltlich in diese Beschreibung mit aufgenommen.

Außerdem wird eine Anordnung zur Steuerung einer akustischen Wiedergabe von Audioinformationen vorgeschlagen, wobei die Audioinformationen Audioelemente aufweisen, die sich periodisch wiederholen und wobei die Anordnung Folgendes aufweist:
- eine Erfassungseinrichtung zur Erfassung von Bewegungsinformationen über einen Bewegungsprozess, der wiederkehrende Ereignisse aufweist, und
- eine Steuereinrichtung, die ausgestaltet ist, unter Verwendung der Bewegungsinformationen die Wiedergabe der Audioinformationen derart zu steuern, dass zumindest innerhalb eines Zeitraumes jedes n-te der sich periodisch wiederholenden Audioelemente gleichzeitig (synchron) mit dem Zeitpunkt des Auftretens eines der wiederkehrenden Ereignisse wiedergegeben wird (Synchronisierung) oder zeitlich um einen vorgegebenen Zeitbetrag versetzt gegen den Zeitpunkt des Auftretens eines der wiederkehrenden Ereignisse wiedergegeben wird (Offset-Synchronisierung), wobei n eine positive ganze Zahl ist.

Die Anordnung kann insbesondere in ein mobiles Gerät integriert sein, das während der Bewegung am Körper der Person befestigt sein kann und/oder von der Person getragen werden kann. Dabei kann die Erfassungseinrichtung zur Erfassung der Bewegungsinformationen signaltechnisch an einen oder mehrere Sensoren angeschlossen sein, die entsprechend der Bewegung Signale liefern. Die Erfassungseinrichtung wertet die Signale aus und bestimmt daraus die wiederkehrenden Ereignisse. Beispielsweise handelt es sich bei dem Sensor um einen Drucksensor, der in der Schuhsohle eines Joggers oder Läufers angeordnet ist. Alternativ oder zusätzlich kann z. B. zumindest ein Beschleunigungssensor (z. B. erhältlich von Analog Devices, Corporate Headquarters, One Technology Way, Norwood, Massachusetts, USA unter der Bezeichnung "ADXL202 DUAL-AXIS ACCELEROMETER") und/oder zumindest ein Federmechanismus mit einem federnd an einer Basis befestigten Gewicht zur Bestimmung der Bewegungsereignisse verwendet werden. Im Fall des federnd an einer Basis befestigten Gewichts wird zum Beispiel dann die Erzeugung eines Signals ausgelöst, wenn das Gewicht eine bestimmte Position erreicht und/oder anschlägt.

Bei dem mobilen Gerät kann es sich z. B. um ein bekanntes Audio-Wiedergabe gerät (z. B. einen MP3-Spieler, ein Mobiltelefon und/oder einen PDA, Personal Digital Assistant) handeln, der so modifiziert wurde, dass er in der Lage ist, die Synchronisation durchzuführen.

Ferner gehört zum Umfang der Erfindung ein Computerprogramm, das bei Ablauf auf einem Computer (z. B. einer mikroelektronischen Recheneinheit) oder Computer-Netzwerk das erfindungsgemäße Verfahren in einer seiner Ausgestaltungen ausführt.

Weiterhin gehört zum Umfang der Erfindung ein Computerprogramm mit Programmcode-Mitteln, um das erfindungsgemäße Verfahren in einer seiner Ausgestaltungen durchzuführen, wenn das Programm auf einem Computer oder Computer-Netzwerk ausgeführt wird. Insbesondere können die Programmcode-Mittel auf einem computerlesbaren Datenträger gespeichert sein.

Außerdem gehört zum Umfang der Erfindung ein Datenträger, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann.

Auch gehört zum Umfang der Erfindung ein Computerprogramm-Produkt mit auf einem maschinenlesbaren Träger gespeicherten Programmcode-Mitteln, um das erfindungsgemäße Verfahren in einer seiner Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Ausführungsbeispiele der Erfindung werden nun unter Bezugnahme auf die beigefügte Zeichnung geschrieben. Die einzelnen Figuren der Zeichnung zeigen:
- Figur 1:: eine schematische Darstellung von Prozessschritten bei der Wiedergabe von Audioinformationen,
- Figur 2:: eine schematische Darstellung von Prozessschritten bei der Synchronisierung;
- Figur 3:: eine besonders bevorzugte Ausgestaltung einer Anordnung zur Steuerung (hier: Regelung) der Wiedergabe von Audioinformationen,
- Figur 4:: eine spezielle Ausgestaltung eines Stellgliedes der in Figur 3 dargestellten Anordnung,
- Figur 5:: den zeitlichen Verlauf von Signalen beim Betrieb der Anordnung gemäß Figur 3 und
- Figur 6:: ein Diagramm, das eine zweite besonders bevorzugte Ausgestaltung der Erfindung erläutert.

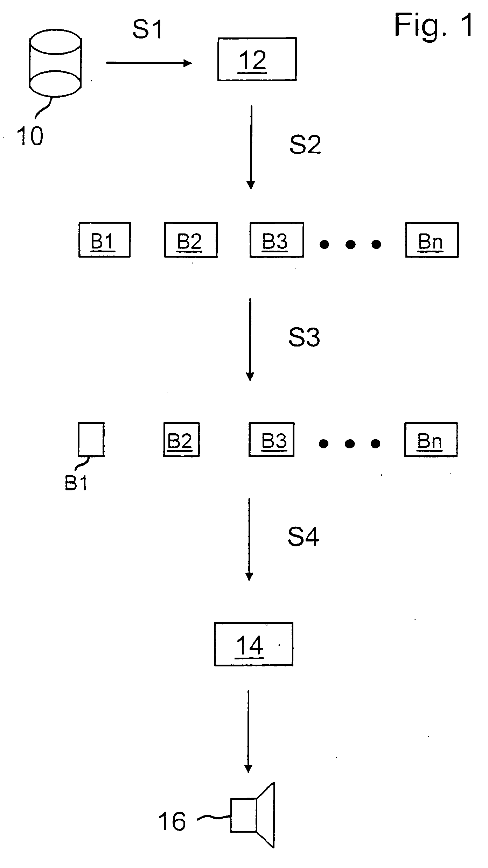

Eine Anordnung zur Steuerung der Wiedergabe von Audioinformationen weist beispielsweise Elemente auf, die nun anhand von Figur 1 beschrieben werden. Dabei können diese Elemente in besonderer Ausgestaltung ganz oder teilweise durch ein einziges, gemeinsames Hardware-Element realisiert werden (z. B. einen Mikrocomputer). Zusätzlich kann Software vorgesehen sein, die den Betrieb der Elemente steuert. Insbesondere ist die im Folgenden beschriebene Steuerung der Veränderung von Blockgrößen vorzugsweise mittels Software realisiert.

Audioinformationen sind beispielsweise in bekannter Weise kodiert (z. B. im MP3-Format) und in einem Datenspeicher 10 abgespeichert (Figur 1). In einem ersten Schritt S1 zur Wiedergabe der Audioinformationen werden die kodierten Daten aus dem Datenspeicher 10 ausgelesen und in einer Dekodierungseinheit 12 dekodiert. Als Ergebnis der Dekodierung liegen für die Wiedergabe der Audioinformationen geeignete Amplitudenwerte als Funktionen der Zeit vor (z. B. Daten im so genannten Wave-Format).

In einem zweiten Schritt S2 werden die dekomprimierten Daten in Blöcken B1, B2, B3 ... Bn strukturiert (z. B. mittels entsprechenden Datenfeldern durch Software verwaltet). Jeder Block B1, B2, B3 ... Bn enthält Teilinformationen der dekodierten Audioinformationen, wobei der jeweilige Teil bei normaler Wiedergabegeschwindigkeit einem Zeitintervall vorgegebener Größe entspricht. D. h., die in dem jeweiligen Block verwalteten Audioinformationen bestimmen die Wiedergabe der Audioinformationen in dem zugeordneten Zeitintervall eindeutig.

Durch die Dekodierung werden laufend weitere dekodierte Audiodaten generiert, die z. B. in einem Pufferspeicher zwischengespeichert werden können. Auf diese Weise werden laufend neue Blöcke generiert. Die Blöcke bilden eine zeitlich geordnete Folge. Z. B. werden die in dem Block B2 verwalteten Daten wiedergegeben, sobald die Wiedergabe der in dem Block B1 verwalteten Daten beendet ist. Beispielsweise entsprechen die dekodierten Daten einer Abtastung eines analogen Audiosignals mit 44 kHz und sind jeweils 256 zeitlich aufeinander folgende Abtastwerte in einem Block verwaltet. Die Erfindung ist jedoch nicht auf diese Zahlenwerte beschränkt. Es können andere Abtastraten, variable Abtastraten und/oder andere Strukturen der datentechnischen Verwaltung verwendet werden.

Ein Vorteil der Blockstruktur besteht darin, dass diese Struktur unmittelbar bei der Veränderung der Wiedergabegeschwindigkeit genutzt werden kann, beispielsweise für eine Fourier-Analyse verwendet werden kann. Eine solche Fourier-Analyse findet beispielsweise in einem Element der Anordnung statt, das nicht in Figur 1 dargestellt ist und das frequenzselektiv die Manipulation der Daten erlaubt. Eine solche Manipulation ist nicht Voraussetzung für die vorliegende Erfindung. Das Element zur Manipulation ist beispielsweise ein so genannter Equalizer.

In Schritt S3 (Figur 1) wird eine Veränderung der Größe der Blöcke B1, B2, B3 ... Bn vorgenommen, d. h. die Menge der in den einzelnen Blöcken gespeicherten Daten verändert. Wird die Menge der Daten eines Blocks erhöht (z. B. von 256 Abtastwerten auf 300 Abtastwerte), erhöht sich die für die Wiedergabe der Daten des Blocks benötigte Zeitspanne. Wird die Menge der in einem Block gespeicherten Daten erniedrigt, verringert sich die Zeitspanne zur Wiedergabe der Audiodaten des Blocks. Anders ausgedrückt: Das Verhältnis der Datenmenge zu der für die Wiedergabe der Datenmenge benötigten Zeit ist konstant.

In Schritt S3 (Figur 1) wird die Veränderung der Datenmenge so vorgenommen, dass sich dadurch keine Veränderung von Tonhöhen ergibt. Im Ausführungsbeispiel verringert sich die Datenmenge des Blocks B1 in erheblichem Maße, z. B. von 256 Abtastwerten auf 200 Abtastwerte. Ferner wird die Datenmenge in Block B2 verringert, jedoch in geringerem Maße als bei Block B1. Eine noch geringere Reduktion der Datenmenge findet bei Block B3 statt. Auf diese Weise wird beim Abspielen der Blöcke B1 bis B3 gegenüber der normalen Wiedergabegeschwindigkeit zunächst eine große Geschwindigkeitserhöhung erzielt (Block B1), die im weiteren Verlauf abnimmt.

In Schritt S4 werden die Audiodaten sukzessiv Block für Block einer optionalen Weiterverarbeitung unterzogen (z. B. um die Lautstärke anzupassen und/oder um aufeinander folgende Blöcke für eine vom Hörer als angenehm empfundene Audiowiedergabe anzupassen, beispielsweise Blockübergänge zu überblenden) und werden zu einer Audio-Wiedergabeeinrichtung, z. B. zu einem Lautsprecher oder Lautsprechersystem 16 übertragen. Die optionale Weiterverarbeitung und Weiterleitung wird durch eine Einrichtung durchgeführt, die in Figur 1 mit dem Bezugszeichen 14 bezeichnet ist.

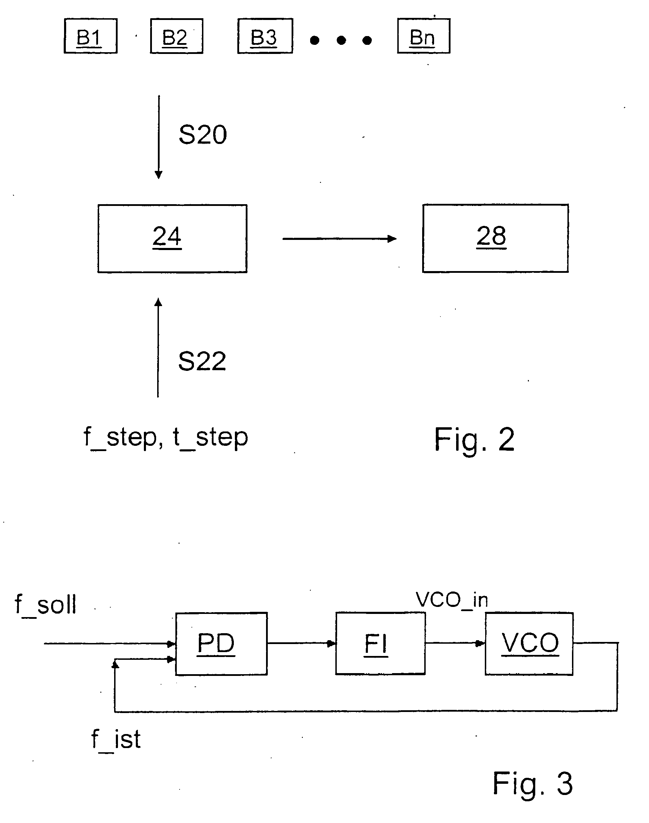

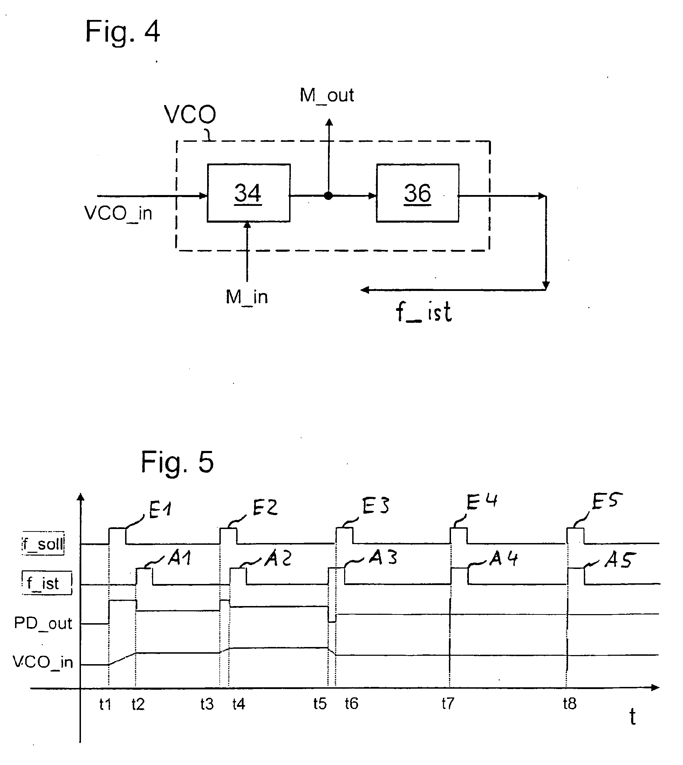

Im Folgenden sollen Details von Schritt S3 beschrieben werden. Dabei handelt es sich um ein Ausführungsbeispiel, das anhand von Figur 2 erläutert wird. Schritt S3 kann jedoch auch in anderer Weise realisiert werden, beispielsweise unter Verwendung der Ausgangssignale der später noch zu beschreibenden Anordnung gemäß Figur 3 und Figur 4.

In Schritt S20 wird fortlaufend für die Blöcke B1, B2, B3 ... Bn ermittelt, ob in dem jeweiligen Block ein Schlag (Beat) auftritt. Da im Ausführungsbeispiel bei normaler Wiedergabegeschwindigkeit von Musik vorzugsweise mehr als 100 Blöcke pro Sekunde vorhanden sind (z. B. bei einer Abtastrate von 44 kHz und einer Blockgröße von 256 Abtastwerten pro Block), kann die Lage eines Schlages mit hoher Genauigkeit bestimmt werden. Durch Berücksichtigung einer Historie des Auftretens von Schlägen (z. B. durch Berücksichtigung jeweils der letzten 10 aufgetretenen Schläge und deren Zeitpunkte bei normaler Wiedergabegeschwindigkeit) kann errechnet werden, wann das Auftreten des nächsten Schlages zu erwarten ist. Beispielsweise wird dieser in der Zukunft liegende Zeitpunkt unter der Annahme berechnet, dass der nächste Schlag die bisher aufgetretene Folge von Schlägen in der gleichen Weise wie bisher fortsetzt. Dabei muss der Abstand zwischen den bereits aufgetretenen Schlägen nicht konstant sein. Vielmehr kann auch festgestellt werden, dass sich der Abstand zwischen jeweils zwei Schlägen verändert hat und kann das Ergebnis dieser Feststellung für die Berechnung des Zeitpunktes des nächsten Schlages genutzt werden.

Außerdem kann es verschiedene Kategorien von Schlägen geben, z. B. schwache und starke Schläge. Bei einer bevorzugten Ausgestaltung werden dabei nur die starken Schläge betrachtet und werden die Audioinformationen so wiedergegeben, dass nur die starken Schläge mit den Bewegungsereignissen synchronisiert werden.

Außerdem können die betrachteten Schläge so mit den Bewegungsereignissen synchronisiert werden, dass nicht jedes der Bewegungsereignisse zeitlich mit einem Schlag zusammenfällt. Vielmehr kann z. B. beim Laufen so synchronisiert werden, dass die Schläge mit dem Auftreten des rechten Fußes (alternativ: mit dem Auftreten des linken Fußes) auf dem Boden synchronisiert werden. Weitere Varianten sind möglich, z. B. die Synchronisierung mit jedem zweiten Auftreten des rechten oder des linken Fußes. Bei besonders schneller normaler Wiedergabegeschwindigkeit der Audioinformationen kann auch so synchronisiert werden, dass nur jeder n-te-Schlag (wobei n eine positive ganze Zahl, größer als 1 ist) mit dem Auftreten des nächsten Fußes (d. h. entweder des rechten oder des linken Fußes) synchronisiert wird.

Insbesondere wenn sich der Rhythmus der Bewegung ändert, kann auch die Art der Synchronisierung geändert werden.

Vorzugsweise wird die normale Wiedergabegeschwindigkeit bei der Synchronisierung um nicht mehr als einen Faktor 0,6 bis 1,6 oder besonders bevorzugt um einen Faktor 0,75 bis 1,5 geändert. Es hat sich herausgestellt, dass eine stärkere Verlangsamung (als Faktor 0,6 bzw. 0,75) oder eine stärkere Beschleunigung (um Faktor 1,6 bzw. 1,5) von der sich bewegenden Person als störend empfunden wird, da die Musik oder andere Audioinformationen unter Umständen nicht wieder erkannt wird.

Daher kann insbesondere bei einem Frequenzwechsel der Bewegung eine Änderung der Art der Synchronisierung wie oben beschrieben erforderlich werden.

Das Ergebnis der Berechnung in Schritt S20 wird einer ersten Steuereinrichtung 24 zugeführt (Figur 2). Außerdem erhält die erste Steuereinrichtung 24 (z. B. von einem Schrittzähler) die Frequenz f_step und den Zeitpunkt t_step. Daraus berechnet die erste Steuereinrichtung 24 die Datenmenge (z. B. die Anzahl der Abtastwerte bei regelmäßiger Abtastung der ursprünglich analogen Audioinformationen), die zu den Blöcken hinzugefügt werden soll oder die aus den Blöcken entfernt werden soll, wobei nur die gesamte Datenmenge derjenigen Blöcke verändert werden soll, die bis zu dem Zeitpunkt der nächsten Synchronisation eines Schlages und eines Bewegungsereignisses abzuspielen sind.

Das Ergebnis der Berechnung wird einer zweiten Steuereinrichtung 28 zugeführt, deren Aufgabe es ist, die Veränderung der Datenmengen in den einzelnen Blöcken vorzunehmen. Ist der Faktor der Reduktion oder Erhöhung der Datenmenge zeitlich konstant, können alle abzuspielenden Blöcke um den gleichen Faktor vergrößert oder verkleinert werden. Muss die Wiedergabegeschwindigkeit jedoch geändert werden, wendet die zweite Steuereinrichtung vorzugsweise folgende Berechnungsweise durch: Die Datenmenge pro Block wird vom jetzigen Zeitpunkt bis zu dem nächsten Synchronzeitpunkt linear erhöht, wobei jedoch in einem ersten Teil des bis zu dem nächsten Synchronzeitpunkt verbleibenden Zeitraumes mit einer ersten Erhöhungsrate von Block zu nächstfolgendem Block erhöht wird und wobei in dem verbleibenden Teil-Zeitraum bis zu dem nächsten Synchronzeitpunkt mit einer zweiten, von der ersten Erhöhungsrate verschiedenen Erhöhungsrate die Datenmenge von Block zu nächstfolgendem Block erhöht wird. Entsprechendes gilt für eine Erniedrigung der Datenmenge pro Block. In diesem Fall wird bis zu dem nächsten Synchronzeitpunkt mit zwei verschiedenen Erniedrigungsraten von Block zu nächstfolgendem Block die Datenmenge erniedrigt.

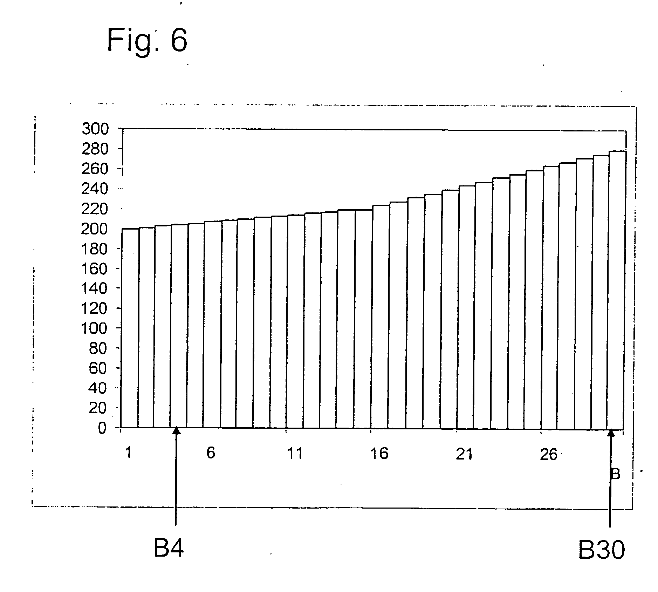

Einen entsprechenden zeitlichen Verlauf der Blockgröße stellt Figur 6 dar. Auf der horizontalen Achse ist die Ordnungsnummer der aufeinander folgenden Blöcke aufgetragen. Die Blockgrenzen sind durch vertikale Striche markiert. Auf der vertikalen Achse ist die Datenmenge pro Block aufgetragen. Wie durch B4 und einen Pfeil markiert ist, enthält der vierte Block einen Schlag. Der nächstfolgende Block, der einen Schlag enthält und außerdem mit dem Auftreten eines Bewegungsereignisses synchronisiert werden soll, liegt ist Block 30 (markiert mit B30). Man erkennt die lineare Erhöhung der Datenmenge pro Block von 200 Abtastwerten pro Block bei Block 1 bis auf 280 Abtastwerte pro Block bei Block 30. Dabei ist die Erhöhungsrate von Block 1 bis Block 14 konstant und, mit einer größeren Änderungsrate, ebenfalls von Block 15 bis Block 30 konstant.

Im Fall der Erniedrigung der Datenmenge pro Block wird vorzugsweise entsprechend, wiederum mit zwei verschiedenen konstanten Raten die Datenmenge jeweils über einen Teil-Zeitraum von Block zu Block geändert.

Abhängig von der Art der Audioinformationen kann die in Schritt S20 durchgeführte Erkennung, ob ein Block einen Schlag enthält, auch nur einmal zu Beginn der Wiedergabe der Audioinformationen durchgeführt werden, d. h. es wird am Anfang der Wiedergabe die zeitliche Lage und Periode des Auftretens von Schlägen ermittelt. Mit diesen Informationen kann bei geeigneten Audioinformationen bis zum Ende der Wiedergabe zuverlässig vorhergesagt werden, in welchem Block das Auftreten eines Schlages zu erwarten ist.

Anhand der Figuren 3 bis 5 wird nun ein weiteres besonders bevorzugtes Ausführungsbeispiel für die Steuerung der Synchronisierung beschrieben. Dabei ist die Steuerung durch einen PLL-Regelkreis (Figur 3) realisiert. Der Regelkreis weist einen Phasenkomparator PD, einen nachgeschalteten Tiefpassfilter FI und ein wiederum nachgeschaltetes Stellglied VCO auf. Dem Komparator PD werden zwei verschiedene Eingangssignale zugeführt, die beide z. B. ein 5 Volt-TTL-Signal sein können. In diesem Fall bedeutet ein kurzzeitig auftretender höherer Signalpegel das Auftreten eines Schlages (im Signal f_ist) bzw. das Auftreten eines Bewegungsereignisses der Bewegung (im Signal f_soll). Der Komparator bildet die Differenz der Signale f_soll und f_ist und führt die Differenz dem Filter FI zu. Durch Einstellung der Parameter des Tiefpassfilters FI kann das Regelverhalten des Regelkreises eingestellt werden. Aufgrund des Tiefpass-Charakters werden kurzzeitige (hochfrequente) Änderungen der Signaldifferenz (und damit Abweichungen bei der Synchronisation) geringer bewertet als langfristige Unterschiede. Das entsprechende Ausgangssignal des Filters FI kann daher zur Einstellung des Stellgliedes und damit zur Veränderung des Signals f_ist verwendet werden.

Wie Figur 4 zeigt ist das Stellglied VCO vorzugsweise durch ein erstes Modul 34 und ein nachgeschaltetes zweites Modul 36 realisiert. Dabei ist das erste Modul 34 in einer speziellen Ausführungsform ausgestaltet, die Größe der wiederzugebenden Blöcke in Abhängigkeit von seinem Eingangssignal VCO_in zu verändern. Daher sind die wiederzugebenden Audiodaten, bzw. die entsprechenden Blöcke, ebenfalls Eingangsdaten des Moduls 34, wie durch M_in angedeutet ist. Bedeutet das Eingangssignal VCO_in, dass die Schläge zeitlich hinter den Bewegungsereignissen hinterherhinken (positive Sollwertabweichung) reagiert das Modul 34 mit einer zumindest temporären Verringerung der Datenmenge der Blöcke, so dass die Audiodaten im Vergleich zu der normalen Wiedergabegeschwindigkeit schneller wiedergegeben werden und so die Schläge wieder zum Zeitpunkt des Auftretens der Bewegungsereignisse wiedergegeben werden. Diese Situation liegt den in Figur 5 dargestellten Signalen zugrunde. Am Anfang des dargestellten Zeitbereichs findet das Bewegungsereignis (Beginn des Ereignisses zum Zeitpunkt t1) zu einem früheren Zeitpunkt statt als der Schlag (Beginn des Schlages zum Zeitpunkt t2). Das Ausgangssignal PD_out des Phasenkomparators PD erhöht sich daher ab dem Zeitpunkt t1 auf einen Wert größer als 0. Das entsprechende Tiefpassgefilterte Ausgangssignal VCO_in des Filters FI, das das Eingangssignal des Moduls 34 ist, erhöht sich daher ab dem Zeitpunkt t1 entsprechend langsamer und verbleibt ab dem Zeitpunkt t2 auf einem etwa konstanten Wert, bis zum Zeitpunkt t3 erneut ein Bewegungsereignis beginnt. Bis zu dem Zeitpunkt t3 hat das Modul 34 bereits reagiert und das Abspielen der Musik beschleunigt. Daher ist die Zeitdifferenz zwischen dem Bewegungsereignis (Signal f_soll) und dem Schlag (Signal f_ist) geringer geworden. Aufgrund des trägen Charakters der Regelstrecke findet die Wiedergabe der Audioinformationen weiter mit der höheren Geschwindigkeit statt. Daher liegt der nächste Schlag zum Zeitpunkt t5 vor dem Beginn des nächsten Bewegungsereignisses zum Zeitpunkt t6. Daher reduziert sich jedoch auch das gefilterte Ausgangssignal VCO_in des Filters Fl. Beim nächsten Auftreten des Bewegungsereignisses zum Zeitpunkt t7 ist die Synchronisierung nahezu vollständig erreicht. Die geringfügigen Abweichungen können von der Person, die sich bewegt, nicht mehr wahrgenommen werden.

Die entsprechend modifizierten Audioinformationen werden am Ausgang des Moduls 34 bereitgestellt und können (wie durch M_out dargestellt) für die Ausgabe z. B. an den Lautsprecher 16 verwendet werden. Außerdem wird das Signal M_out dem zweiten Modul 36 zugeführt, welches daraus das Signal f_ist erzeugt. Beispielsweise kann das zweite Modul 36 hierzu eine Detektion von Schlägen in dem Signal M_out durchführen. Die Detektion von Schlägen kann wie oben anhand der unveränderten Audioinformationen beschrieben vorgenommen werden.

## Patentansprüche

1. Verfahren zur Steuerung einer akustischen Wiedergabe von Audioinformationen, wobei
- die Audioinformationen Audioelemente (A1 bis A5) aufweisen, die sich periodisch wiederholen,
- Bewegungsinformationen über einen Bewegungsprozess erfasst werden, der wiederkehrende Ereignisse (E1 bis E5) aufweist, oder derartige Bewegungsinformationen vorliegen, und
- unter Verwendung der Bewegungsinformationen die Wiedergabe der Audioinformationen derart geregelt wird, dass zumindest innerhalb eines Zeitraumes jedes n-te der sich periodisch wiederholenden Audioelemente (A1 bis A5) gleichzeitig (synchron) mit dem Zeitpunkt (t1, t3, t5, t7, t8) des Auftretens eines der wiederkehrenden Ereignisse (E1 bis E5) wiedergegeben wird (Synchronisierung) oder zeitlich um einen vorgegebenen Zeitbetrag versetzt gegen den Zeitpunkt (t1, t3, t5, t7, t8) des Auftretens eines der wiederkehrenden Ereignisse (E1 bis E5) wiedergegeben wird (Offset-Synchronisierung), wobei n eine positive ganze Zahl ist,
**dadurch gekennzeichnet, dass**
eine Signalfolge (f_soll), die den zeitlichen Verlauf des Auftretens der Bewegungsereignisse (E1 bis E5) wiedergibt, mit einer rückgekoppelten, an einem Ausgang eines Regelkreises (PD, FI, VCO) als Ausgangsignal anliegenden Signalfolge (f_ist) verglichen wird, wobei die Signalfolge (f_ist) einen zeitlichen Verlauf des Auftretens der wiederkehrenden Audioelemente (A1 bis A5) wiedergibt und wobei eine sich aus dem Vergleich ergebende Zeitdifferenz zwischen jeweils einem der Audioelemente (A1 bis A5) und einem der wiederkehrenden Ereignisse (E1 bis E5) ausgeregelt wird.

2. Verfahren nach dem vorhergehenden Anspruch, wobei unter Verwendung der Bewegungsinformationen die Wiedergabe der Audioinformationen derart geregelt wird, dass zumindest innerhalb eines Zeitraumes jedes n-te der sich periodisch wiederholenden Audioelemente gleichzeitig mit dem Zeitpunkt des Auftretens jedes m-ten der wiederkehrenden Ereignisse wiedergegeben wird oder zeitlich um den vorgegebenen Zeitbetrag versetzt gegen den Zeitpunkt des Auftretens jedes m-ten der wiederkehrenden Ereignisse wiedergegeben wird, wobei n, m positive ganze Zahlen sind.

3. Verfahren nach einem der vorhergehenden Ansprüche, wobei sich eine Periodendauer der wiederkehrenden Ereignisse verändert und wobei die Wiedergabe der Audioinformationen derart geregelt wird, dass zumindest innerhalb eines Zeitraumes nach und/oder während der Veränderung der Periodendauer jedes o-te der sich periodisch wiederholenden Audioelemente gleichzeitig mit einem Auftreten eines der wiederkehrenden Ereignisse wiedergegeben wird oder zeitlich um den vorgegebenen Zeitbetrag versetzt gegen ein Auftreten eines der wiederkehrenden Ereignisse wiedergegeben wird, wobei o gleich n ist oder eine andere positive ganze Zahl ist.

4. Verfahren nach einem der vorhergehenden Ansprüche, wobei die Audioinformationen so wiedergegeben werden, dass sich Tonhöhen der Audioinformationen durch die Synchronisierung nicht verändern.

5. Verfahren nach dem vorhergehenden Anspruch, wobei Blöcke (B1 bis Bn) mit Daten gebildet werden, wobei die Daten Teilinformationen der Audioinformationen sind, wobei jeder der Blöcke (B1 bis Bn) bei unveränderter Wiedergabegeschwindigkeit jeweils einem Zeitintervall entspricht, das zur Wiedergabe der in dem Block (B1 bis Bn) enthaltenen Daten benötigt wird, wobei zur Erhöhung der Wiedergabegeschwindigkeit die Menge der Daten in zumindest einem der Blöcke (B1 bis Bn) reduziert wird und wobei zur Verringerung der Wiedergabegeschwindigkeit die Menge der Daten in zumindest einem der Blöcke (B1 bis Bn) erhöht wird.

6. Verfahren nach einem der vorhergehenden Ansprüche, wobei die erfassten Bewegungsinformationen derart gefiltert werden, dass scheinbar aufgetretene Bewegungsereignisse, die jedoch tatsächlich nicht aufgetreten sind, aus den Bewegungsinformationen herausgefiltert werden oder der Einfluss der scheinbaren Bewegungsereignisse auf die Synchronisierung verringert wird.

7. Verfahren nach einem der vorhergehenden Ansprüche, wobei Zeitpunkte des Auftretens der wiederkehrenden Ereignisse für die Vergangenheit bestimmt werden und/oder entsprechende gespeicherte Informationen ausgewertet werden, wobei aus den in der Vergangenheit liegenden Zeitpunkten ein in der Zukunft liegender Zeitpunkt vorhergesagt wird und wobei vorausberechnet wird, wie die Audioinformationen bis zu dem in der Zukunft liegenden Zeitpunkt wiederzugeben sind, damit ein Audioelement der Audioinformationen zu diesem Zeitpunkt oder um den vorgegebenen Zeitbetrag versetzt gegen diesen Zeitpunkt wiedergegeben wird.

8. Verfahren nach dem vorhergehenden Anspruch, wobei eine Geschwindigkeit der Wiedergabe der Audioinformationen bis zu dem in der Zukunft liegenden Zeitpunkt stetig verändert wird, sodass das Audioelement zu diesem Zeitpunkt oder um den vorgegebenen Zeitbetrag versetzt gegen diesen Zeitpunkt wiedergegeben wird.

9. Verfahren nach dem vorhergehenden Anspruch, wobei für den Vergleich ein Komparator (PD) verwendet wird und wobei ein Ausgangssignal des Komparators (PD) einem Stellglied (VCO) zugeführt, das die Wiedergabe der Audioinformationen steuert.

10. Verfahren nach dem vorhergehenden Anspruch, wobei ein Ausgangssignal (PD_out) des Komparators (PD) einem Filter (FI), insbesondere einem Tiefpass-Filter, als Eingangssignal zugeführt wird und das Ausgangssignal dem Stellglied (VCO) zugeführt wird.

11. Verfahren nach einem der beiden vorhergehenden Ansprüche, wobei aus einem Ausgangssignal (M_out) des Stellgliedes (VCO) und/oder aus dem Ausgangssignal des Filters das Ausgangssignal (f_ist) des Regelkreises erzeugt wird, welches rückgekoppelt wird.

12. Datenträger, insbesondere Arbeitsspeicher einer mikroelektronischen Recheneinrichtung, auf dem eine Datenstruktur gespeichert ist, wobei die Datenstruktur ausgestaltet ist, beim Betrieb eines Computers abgearbeitet zu werden, sodass das Verfahren gemäß einem der vorhergehenden Ansprüche ausgeführt wird.

13. Anordnung zur Steuerung einer akustischen Wiedergabe von Audioinformationen, wobei die Audioinformationen Audioelemente (A1 bis A5) aufweisen, die sich periodisch wiederholen und wobei die Anordnung Folgendes aufweist:
• eine Erfassungseinrichtung (24) zur Erfassung von Bewegungsinformationen über einen Bewegungsprozess, der wiederkehrende Ereignisse (E1 bis E5) aufweist, und
• eine Regeleinrichtung, die ausgestaltet ist, unter Verwendung der Bewegungsinformationen die Wiedergabe der Audioinformationen derart zu steuern, dass zumindest innerhalb eines Zeitraumes jedes n-te der sich periodisch wiederholenden Audioelemente (A1 bis A5) gleichzeitig (synchron) mit dem Zeitpunkt (t1, t3, t5, t7, t8) des Auftretens eines der wiederkehrenden Ereignisse (E1 bis E5) wiedergegeben wird (Synchronisierung) oder zeitlich um einen vorgegebenen Zeitbetrag versetzt gegen den Zeitpunkt (t1, t3, t5, t7, t8) des Auftretens eines der wiederkehrenden Ereignisse (E1 bis E5) wiedergegeben wird (Offset-Synchronisierung), wobei n eine positive ganze Zahl ist,
**dadurch gekennzeichnet, dass**
die Regeleinrichtung einen Regelkreis (PD, FI, VCO) mit einem Komparator (PD) aufweist, an dem als ein erstes Eingangssignal eine erste Signalfolge (f_soll) anliegt, die den zeitlichen Verlauf des Auftretens der Bewegungsereignisse (E1 bis E5) wiedergibt, und an dem als ein zweites Eingangssignal eine von einem Ausgang des Regelkreises (PD, FI, VCO) rückgekoppeltes Ausgangsignal anliegt, das eine zweite Signalfolge (f_ist) ist, wobei die zweite Signalfolge (f_ist) einen zeitlichen Verlauf des Auftretens der wiederkehrenden Audioelemente (A1 bis A5) wiedergibt, wobei ein Ausgangssignal des Komparators (PD), das eine Zeitdifferenz zwischen jeweils einem der Audioelemente (A1 bis A5) und einem der wiederkehrenden Ereignisse (E1 bis E5) wiedergibt, einem Stellglied (VCO) als Eingangssignal zugeführt ist, wobei der Regelkreis (PD, FI, VCO) ausgestaltet ist, die Zeitdifferenz auf null auszuregeln oder auf den vorgegebenen Zeitbetrag auszuregeln.

14. Anordnung nach dem vorhergehenden Anspruch, wobei die Erfassungseinrichtung mit einem ersten Eingang eines Komparators (PD) verbunden ist, und wobei die Anordnung eine Einrichtung (36) aufweist, die ausgestaltet ist, aus einem Ausgangssignal des Stellgliedes (VCO) das rückgekoppelte Ausgangsignal (f_ist) zu erzeugen und wobei ein Ausgang der Einrichtung (36), an dem das rückgekoppelte Ausgangsignal (f_ist) anliegt, mit einem zweiten Eingang des Komparators (PD) verbunden ist.

## Claims

1. Method for controlling audible reproduction of audio information, wherein
- the audio information contains audio elements (A1 to A5) which are repeated periodically,
- movement information about a movement process which contains recurring events (E1 to E5) is captured, or such movement information is available, and
- the movement information is used to regulate the reproduction of the audio information such that, at least within one period, every n-th instance of the periodically repeated audio elements (A1 to A5) is reproduced at the same time as (in sync with) the time (t1, t3, t5, t7, t8) of occurrence of one of the recurring events (E1 to E5) (synchronization) or is reproduced with a time offset by a prescribed absolute time value relative to the time (t1, t3, t5, t7, t8) of occurrence of one of the recurring events (E1 to E5) (offset synchronization), wherein n is a positive integer,
**characterized in that**
a signal train (f_target) which reproduces the time profile of the occurrence of the movement events (E1 to E5) is compared with a fed-back signal train (f_actual) which is applied as an output signal to an output of a control loop (PD, FI, VCO), wherein the signal train (f_actual) reproduces a time profile for the occurrence of the recurring audio elements (A1 to A5) and wherein a time difference, which results from the comparison, between one of the audio elements (A1 to A5) and one of the recurring events (E1 to E5), respectively, is corrected.

2. Method according to the preceding claim, wherein the movement information is used to regulate the reproduction of the audio information such that, at least within one period, every n-th instance of the periodically repeated audio elements is reproduced at the same time as the time of occurrence of every m-th instance of the recurring events or is reproduced with a time offset by the prescribed absolute time value relative to the time of occurrence of every m-th instance of the recurring events, wherein n, m are positive integers.

3. Method according to one of the preceding claims, wherein a period duration for the recurring events is altered and wherein the reproduction of the audio information is regulated such that, at least within one period after and/or during the alteration of the period duration, every o-th instance of the periodically repeated audio elements is reproduced at the same time as an occurrence of one of the recurring events or is reproduced with a time offset by the prescribed absolute time value relative to an occurrence of one of the recurring events, wherein o is equal to n or another positive integer.

4. Method according to one of the preceding claims, wherein the audio information is reproduced such that tone pitches of the audio information are not altered by the synchronization.

5. Method according to the preceding claim, wherein blocks (B1 to Bn) with data are formed, wherein the data are information portions of the audio information, wherein each of the blocks (B1 to Bn) corresponds, at unaltered reproduction speed, to a respective time interval which is required for reproducing the data contained in the block (B1 to Bn), the reproduction speed is increased by reducing the volume of the data in at least one of the blocks (B1 to Bn) and wherein the reproduction speed is decreased by increasing the volume of the data in at least one of the blocks (B1 to Bn).

6. Method according to one of the preceding claims, wherein the captured movement information is filtered such that movement events which appear to have occurred but which have not actually occurred are filtered out of the movement information, or the influence of the apparent movement events on the synchronization is reduced.

7. Method according to one of the preceding claims, wherein times of occurrence of the recurring events are determined for the past and/or corresponding stored information is evaluated, wherein the times in the past are used to predict a time in the future and wherein advanced calculation is performed to determine how the audio information needs to be reproduced up to the time in the future so that an audio element of the audio information is reproduced at this time or with an offset by the prescribed absolute time value relative to this time.

8. Method according to the preceding claim, wherein a speed for the reproduction of the audio information up to the time in the future is altered continually, so that the audio element is reproduced at this time or with an offset by the prescribed absolute time value relative to this time.

9. Method according to the preceding claim, wherein a comparator (PD) is used for the comparison and wherein an output signal from the comparator (PD) is supplied to an actuating element (VCO) which controls the reproduction of the audio information.

10. Method according to the preceding claim, wherein an output signal (PD_out) from the comparator (PD) is supplied as an input signal to a filter (FI), particularly a low-pass filter, and the output signal is supplied to the actuating element (VCO).

11. Method according to one of the two preceding claims, wherein an output signal (M_out) from the actuating element (VCO) and/or the output signal from the filter is/are used to produce the output signal (f_actual) from the control loop which is fed back.

12. Data storage medium, particularly a main memory in a microelectronic computation device, which stores a data structure, wherein the data structure is configured to be executed during operation of a computer, so that the method according to one of the preceding claims is performed.

13. Arrangement for controlling audible reproduction of audio information, wherein the audio information contains audio elements (A1 to A5) which are repeated periodically and wherein the arrangement contains the following:
• a capture device (24) for capturing movement information about a movement process which contains recurring events (E1 to E5), and
• a regulator device which is configured to use the movement information to control the reproduction of the audio information such that, at least within one period, every n-th instance of the periodically repeated audio elements (A1 to A5) is reproduced at the same time as (in sync with) the time (t1, t3, t5, t7, t8) of occurrence of one of the recurring events (E1 to E5) (synchronization) or is reproduced with a time offset by a prescribed absolute time value relative to the time (t1, t3, t5, t7, t8) of occurrence of one of the recurring events (E1 to E5) (offset synchronization), wherein n is a positive integer,
**characterized in that**
the regulator device contains a control loop (PD, FI, VCO) having a comparator (PD) to which, as a first input signal, a first signal train (f_target) is applied which reproduces the time profile of the occurrence of the movement events (E1 to E5), and to which, as a second input signal, an output signal which is fed back from an output of the control loop (PD, FI, VCO) and which is a second signal train (f_actual) is applied, wherein the second signal train (f_actual) reproduces a time profile for the occurrence of the recurring audio elements (A1 to A5), wherein an output signal from the comparator (PD) which reproduces a time difference between one of the audio elements (A1 to A5) and one of the recurring events (E1 to E5), respectively, is supplied as input signal to an actuating element (VCO), wherein the control loop (PD, FI, VCO) is configured to correct the time difference to zero or to correct the time difference to the prescribed absolute time value.

14. Arrangement according to the preceding claim, wherein the capture device is connected to a first input of a comparator (PD), and wherein the arrangement contains a device (36) which is configured to use an output signal from the actuating element (VCO) to produce the fed-back output signal (f_actual) and wherein an output of the device (36) to which the fed-back output signal (f_actual) is applied is connected to a second input of the comparator (PD).

## Revendications

1. Procédé de commande d'une restitution acoustique d'informations audio, dans lequel
- les informations audio comportent des éléments audio (A1 à A5) qui se répètent périodiquement,
- il est détecté des informations de mouvement sur un processus de mouvement qui comporte des événements se reproduisant (E1 à E5), ou des informations de mouvement de ce genre sont présentes, et
- au moyen des informations de mouvement, la restitution des informations audio est réglée de manière telle que, au moins à l'intérieur d'un laps de temps, chaque nème élément des éléments audio se répétant périodiquement (A1 à A5) est restitué (synchronisation) simultanément (de manière synchrone) à l'instant (t1, t3, t5, t7, t8) de l'apparition d'un des événements se reproduisant (E1 à E5) ou est restitué (synchronisation avec décalage) décalé dans le temps d'une valeur temporelle prédéfinie par rapport à l'instant (t1, t3, t5, t7, t8) de l'apparition d'un des événements se reproduisant (E1 à E5), n étant un nombre entier positif,
**caractérisé en ce que**
une suite de signaux (f_soll), qui restitue le déroulement temporel de l'apparition des événements de mouvement (E1 à E5), est comparée à une suite de signaux (f_ist) couplée par réaction, présente en tant que signal de sortie à une sortie d'un circuit de réglage (PD, FI, VCO), la suite de signaux (f_ist) restituant un déroulement temporel de l'apparition des éléments audio se répétant (A1 à A5) et une différence de temps résultant de la comparaison étant réglée entre respectivement un des éléments audio (A1 à A5) et un des événements se reproduisant (E1 à E5).

2. Procédé selon la revendication précédente, dans lequel, au moyen des informations de mouvement, la restitution des informations audio est réglée de manière telle que, au moins à l'intérieur d'un laps de temps, chaque nème élément des éléments audio se répétant périodiquement soit restitué simultanément à l'instant de l'apparition de chaque même événement des événements se reproduisant ou soit restitué décalé dans le temps d'une valeur temporelle prédéfinie par rapport à l'instant de l'apparition de chaque même événement des événements se reproduisant, n et m étant des nombres entiers positifs.

3. Procédé selon l'une quelconque des revendications précédentes, dans lequel une durée de période des événements se reproduisant se modifie et dans lequel la restitution des informations audio est réglée de manière telle que, au moins à l'intérieur d'un laps de temps après et/ou durant la modification de la durée de période, chaque oème élément des éléments audio se répétant périodiquement soit restitué simultanément à une apparition d'un des événements se reproduisant ou soit restitué décalé dans le temps d'une valeur temporelle prédéfinie par rapport à une apparition d'un des événements se reproduisant, o étant soit égal à n, soit un autre nombre entier positif.

4. Procédé selon l'une quelconque des revendications précédentes, dans lequel les informations audio sont restituées de sorte que des son aigus des informations audio ne soient pas modifiés par la synchronisation.

5. Procédé selon la revendication précédente, dans lequel des blocs (B1 à Bn) sont formés avec des données, les données étant des informations partielles des informations audio, chaque bloc (B1 à Bn) correspond, en cas de vitesse de restitution inchangée, respectivement à un intervalle de temps qui est nécessaire pour la restitution des données contenues dans le bloc (B1 à Bn), la quantité des données dans au moins un des blocs (B1 à Bn) étant réduite afin d'augmenter la vitesse de restitution et la quantité des données dans au moins un des blocs (B1 à Bn) étant augmentée afin de diminuer la vitesse de restitution.

6. Procédé selon l'une quelconque des revendications précédentes, dans lequel les informations de mouvement détectées sont filtrées de manière telle que des événements de mouvement apparemment apparus, mais qui ne sont pas apparus en réalité, soient éliminés par filtrage des informations de mouvement ou que l'influence des événements de mouvement apparents sur la synchronisation soit diminuée.

7. Procédé selon l'une quelconque des revendications précédentes, dans lequel des instants de l'apparition des événements se reproduisant sont déterminés pour le passé et/ou des informations enregistrées correspondantes sont évaluées, dans lequel on prédit, à partir des instants situés dans le passé, un instant situé dans le futur et on calcule à l'avance comment les informations audio seront restituées jusqu'à l'instant situé dans le futur afin qu'un élément audio des informations audio soit restitué à cet instant ou soit restitué décalé dans le temps de la valeur temporelle prédéfinie par rapport à cet instant.

8. Procédé selon la revendication précédente, dans lequel une vitesse de restitution des informations audio est modifiée en permanence jusqu'à l'instant situé dans le futur de sorte que l'élément audio soit restitué à cet instant ou soit restitué décalé dans le temps de la valeur temporelle prédéfinie par rapport à cet instant.

9. Procédé selon la revendication précédente, dans lequel on emploie un comparateur (PD) pour la comparaison et dans lequel un signal de sortie du comparateur (PD) est amené à un composant de réglage (VCO) qui commande la restitution des informations audio.

10. Procédé selon la revendication précédente, dans lequel un signal de sortie (PD_out) du comparateur (PD) est amené à un filtre (FI), en particulier un filtre passe-bas, en tant que signal d'entrée et le signal de sortie est amené au composant de réglage (VCO).

11. Procédé selon l'une des deux revendications précédentes, dans lequel le signal de sortie (f_ist) du circuit de réglage est généré à partir d'un signal de sortie (M_out) du composant de réglage (VCO) et/ou du signal de sortie du filtre, et est couplé en réaction.

12. Support de données, en particulier mémoire de travail d'un dispositif de calcul microélectronique, dans lequel est enregistrée une structure de données, la structure de données étant agencée pour être traitée lors de l'exploitation d'un ordinateur afin d'exécuter le procédé conforme à l'une quelconque des revendications précédentes.

13. Dispositif de commande d'une restitution acoustique d'informations audio, dans lequel les informations audio comportent des éléments audio (A1 à A5) qui se répètent périodiquement et dans lequel le dispositif comporte les éléments suivantes :
- un système de détection (24) servant à détecter des informations de mouvement sur un processus de mouvement qui comporte des événements se reproduisant (E1 à E5), et
- un système de réglage, qui est conçu pour commander la restitution des informations audio au moyen des informations de mouvement de manière telle que, au moins à l'intérieur d'un laps de temps, chaque nème élément des éléments audio se répétant périodiquement (A1 à A5) soit restitué (synchronisation) simultanément (de manière synchrone) à l'instant (t1, t3, t5, t7, t8) de l'apparition d'un des événements se reproduisant (E1 à E5) ou soit restitué (synchronisation avec décalage) décalé dans le temps d'une valeur temporelle prédéfinie par rapport à l'instant (t1, t3, t5, t7, t8) de l'apparition d'un des événements se reproduisant (E1 à E5), n étant un nombre entier positif,
**caractérisé en ce que**
le système de réglage comporte un circuit de réglage (PD, FI, VCO) doté d'un comparateur (PD) dont un premier signal d'entrée est une première suite de signaux (f_soll) qui restitue le déroulement temporel de l'apparition des événements de mouvement (E1 à E5), et dont un deuxième signal d'entrée est un signal de sortie qui est couplé par réaction depuis une sortie du circuit de réglage (PD, FI, VCO) et qui est une deuxième suite de signaux (f_ist), la deuxième suite de signaux (f_ist) restituant un déroulement temporel de l'apparition des éléments audio se répétant (A1 à A5), dans lequel un signal de sortie du comparateur (PD), qui restitue une différence temporelle entre respectivement un des éléments audio (A1 à A5) et un des événements se reproduisant (E1 à E5), est amené, en tant que signal d'entrée, à un composant de réglage (VCO), le circuit de réglage (PD, FI, VCO) étant agencé pour réguler à zéro la différence temporelle ou la réguler à la valeur temporelle prédéfinie.

14. Dispositif selon la revendication précédente, dans lequel le système de détection est relié à une première entrée d'un comparateur (PD) et dans lequel le dispositif comporte un système (36) qui est agencé pour générer à partir d'un signal de sortie du composant de réglage (VCO) le signal de sortie couplé par réaction (f_ist) et dans lequel une sortie du système (36), sur laquelle est présent le signal de sortie couplé par réaction (f_ist), est reliée à une deuxième entrée du comparateur (PD).
